# FASCICULE DE BREVET EUROPEEN

(11) **EP 3 158 630 B1**
(45) Date de publication et mention de la délivrance du brevet: **25.03.2020**
(21) Numéro de dépôt: 15739655.7
(22) Date de dépôt: 18.06.2015
(51) Int. Cl.: H02K 41/03

(54) **MOTEUR ÉLECTROMAGNÉTIQUE LINÉAIRE À ENTRAÎNEMENT DIRECT ET À DOUBLE ENTREFER AVEC RÉDUCTION DE LA FORCE DE DÉTENTE DANS LE MOTEUR ÉLECTROMAGNÉTIQUE**
DIREKTANTRIEB UND LINEARER, ELEKTROMAGNETISCHER DOPPELLUFTSPALTMOTOR MIT VERMINDERUNG DER RASTKRAFT IM ELEKTROMAGNETISCHEN MOTOR
DIRECT DRIVE AND DOUBLE AIR GAP LINEAR ELECTROMAGNETIC MOTOR WITH REDUCTION OF THE DETENT FORCE IN THE ELECTROMAGNETIC MOTOR

(30) Priorité: 20.06.2014 FR 1401450
(43) Date de publication de la demande: 26.04.2017
(73) Titulaire: Whylot SAS, 46100 Cambes (FR)
(72) Inventeur: MIHAILA Vasile, F-46100 Figeac (FR); RAVAUD Romain, F-46240 Coeur de Caussee (FR)
(86) Numéro de dépôt international: PCT/FR2015/000122
(87) Numéro de publication internationale: WO 2015/193564

(56) Documents cités:
- DE-A1-102006 035 674
- JP-A- 2006 034 013
- US-A1- 2004 217 659
- US-A1- 2010 026 104
- US-B1- 6 803 682

## Description

La présente invention concerne un moteur électromagnétique linéaire à entraînement direct et à double entrefer avec réduction de la force de détente dans le moteur électromagnétique. La fonction de cet actionneur est de générer une force dans le sens longitudinal sur une course donnée.

Un tel moteur linéaire est un moteur électrique qui crée une poussée par un actuateur et transforme une énergie électrique en une énergie mécanique linéaire. A la différence d'un moteur rotatif, ce moteur ne produit pas un couple en rotation mais il produit une force linéaire longitudinale au moteur.

Un tel moteur demande donc beaucoup moins d'adaptations pour la transmission de la force qu'un moteur rotatif classique où le mouvement linéaire est obtenu en couplant le moteur rotatif à une transmission transformant le mouvement de rotation du moteur en un mouvement de translation, par exemple par une vis à bille ou une crémaillère. Il y a donc pour un tel moteur linéaire moins de pièces en mouvement et donc moins d'inertie et de jeux. De ce fait, le moteur linéaire s'impose lorsque la vitesse et la précision sont primordiales.

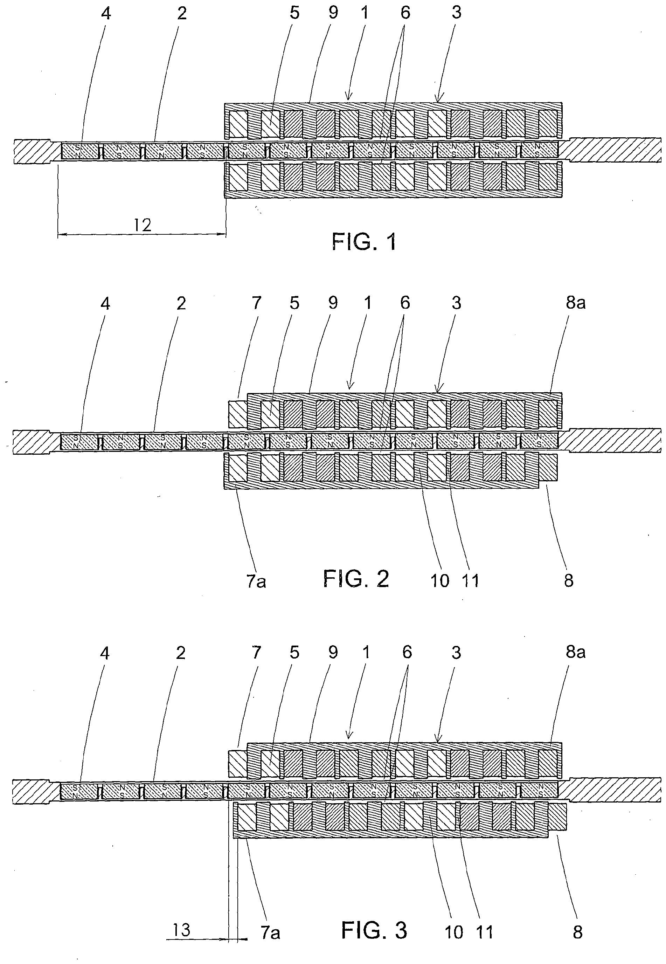

Un moteur linéaire 1 selon l'état de la technique est montré à la figure 1. Il comprend un actuateur 2 ou chariot mobile en mouvement de va et vient dans une partie fixe ou stator 3. L'actuateur 2 comprend une succession d'aimants dans le prolongement les uns des autres dans la longueur de l'actuateur 2, dont un seul aimant est référencé 4 à la figure 1. L'actuateur 2 traverse le stator 3 en longueur en passant par le milieu du stator 3 dans lequel est aménagée une voie d'aimants ou voie magnétique pour le passage de l'actuateur 2.

Le stator 3 comprend aussi une succession de bobines de chaque côté longitudinal de la voie d'aimants, dont une seule bobine est référencée 5 sur ces deux côtés. Il est ainsi créé un entrefer 6 de chaque côté de la voie d'aimants du moteur linéaire 1.

Le principe de fonctionnement d'un moteur linéaire 1 est sensiblement le même que celui d'un moteur classique avec la différence que la succession de bobines 5 et d'aimants 4 se fait à plat et non circulairement et que donc les bobines 5 et les aimants 4 sont disposés pour produire une force et non un couple en rotation, l'actuateur 2 présentant une course 12 dans son mouvement de translation par rapport au stator 3 du moteur linéaire 1.

De tels moteurs linéaires peuvent comprendre du fer ou peuvent être sans fer. Dans un premier mode de réalisation d'un moteur linéaire, dit moteur linéaire sans fer, les bobines sont liées entre elles avec une résine, par exemple de l'époxy. Ce mode de réalisation présente le désavantage d'une force générée moindre et d'une dissipation thermique faible.

Dans un autre mode de réalisation d'un moteur linéaire, les bobines peuvent être maintenues par des moyens de support contenant du fer, ces moyens de support pouvant être des dents. Les bobines créent le champ magnétique autour des dents. Ceci peut provoquer des fluctuations dans l'effort de poussée du champ magnétique.

Comme précédemment mentionné, la vitesse et la précision sont primordiales pour un moteur linéaire. Or la présence de fer présente aussi le désavantage pour le moteur linéaire de posséder hors tension une force résiduelle appelée force de détente.

En se référant à la figure 1, cette force de détente, appelée aussi cogging force en anglais, est dû à l'interaction magnétique entre les aimants 4 permanents de l'actuateur 2 du moteur linéaire 1 et le fer présent dans les moyens de support des bobinages 5 faisant partie du stator 3, le fer étant fréquemment utilisé pour la réalisation de moyens de support sous la forme d'encoches ou de dents. Cette force de détente est indésirable pour le bon fonctionnement du moteur linéaire 1.

Ce problème a été reconnu par l'état de la technique. Par exemple, le document EP-A-2 645 551 décrit un moteur linéaire tubulaire comportant un induit doté d'une bobine et d'un excitateur magnétique à aimants permanents placés en face de la bobine. L'induit présente une culasse qui bloque un flux magnétique et des dents qui cloisonnent une fente de stockage de la bobine. La bobine est agencée de manière à s'étendre au-dessus des dents en direction de l'excitateur magnétique tandis qu'un interstice magnétique est réservé entre l'excitateur magnétique et la bobine. L'excitateur magnétique comporte de nombreux aimants permanents entre lesquels s'interpose un corps mou magnétique.

Ce document reconnaît dans la description que la présence d'une force de détente peut être préjudiciable au bon fonctionnement du moteur linéaire. Ce document propose d'utiliser des dents auxiliaires à chaque extrémité de la rangée de bobines incorporées dans le stator du moteur et de leur donner une longueur fonction de la longueur des autres dents des bobines.

Le document US-A-2004/217659 décrit un moteur électromagnétique linéaire comprenant un actuateur en mouvement de va et vient par rapport à un stator, l'actuateur comprenant une série d'aimants s'étendant dans sa longueur, le stator comprenant un passage longitudinal pour l'actuateur et une série de bobines disposées sur des moyens de support respectifs, une extrémité longitudinale du stator présentant une dissymétrie par rapport à l'autre extrémité du stator.

Si ce document traite bien de la diminution de la force de détente, le moteur décrit ne comporte pas un double entrefer et ne donne aucune indication quant à la réduction de la force de détente pour un moteur linéaire à double entrefer.

Le document JP-A-2006/034013 décrit quant à lui un moteur linéaire à double entrefer. Le but recherché est aussi la réduction de la force de détente. Ce document prévoit d'utiliser des dents d'extrémité longitudinale pour les deux armatures formant stator de chaque côté d'un passage médian de l'actuateur. Les dents auxiliaires pour les extrémités longitudinales sont les mêmes à chaque extrémité d'une armature et donc des deux côtés du passage médian. Ceci n'a pas encore donné entière satisfaction pour la résorption de la force de détente.

Le document DE-A-10 2006 03567 décrit une partie primaire pour une machine électrique, la partie primaire étant formé d'au moins un noyau feuilleté et au moins deux dents externes avec les dents externes disposées respectivement sur les côtés d'extrémité de la partie primaire ayant des longueurs différentes. Si ce document divulgue chacune des dents externes se trouvant respectivement à une des extrémités longitudinales des premier et second côtés du passage du stator présentant une hauteur moindre que les dents servant de moyens de support de bobine, il ne donne aucune indication de quel effet pourrait être escompté d'un tel arrangement.

Le document US-A-2010/026104 décrit un moteur linéaire à course réduite. Afin d'améliorer la dynamique d'un tel moteur linéaire à course réduite, une partie primaire du moteur est pourvue d'un enroulement monocouche. La partie primaire et une partie secondaire présentent le même pas de pôle. De cette façon, un couple de moteur très élevé est produit dans une gamme limitée de déplacement. Le problème à la base de ce document n'est pas de diminuer le couple de détente.

Le document US-B1-6 803 682 décrit un ensemble d'aimants comprenant un fer arrière sous la forme d'une plaque ayant des surfaces opposées. Les aimants sont agencés le long de l'une des surfaces, l'autre surface étant dimensionnée et configurée en fonction de la distribution du champ magnétique associée aux aimants. La géométrie arrière du fer fournit une masse réduite, un flux de fuite réduit et des densités de flux élevées pour améliorer les performances d'un moteur linéaire qui emploie un tel ensemble et non de diminuer la force de détente lors du fonctionnement du moteur linéaire.

Le problème à la base de la présente invention est, pour un moteur linéaire, de diminuer la force de détente lors du fonctionnement du moteur linéaire.

A cet effet et comme décrit dans la revendication indépendante 1, on prévoit selon l'invention un moteur électromagnétique linéaire comprenant un actuateur en mouvement de va et vient par rapport à un stator, l'actuateur comprenant une série d'aimants s'étendant dans sa longueur, le stator comprenant un passage longitudinal pour l'actuateur et une série de bobines disposées sur des moyens de support respectifs, une extrémité longitudinale du stator présentant une dissymétrie par rapport à l'autre extrémité du stator, le stator comprenant sur les premier et second côtés une armature présentant des dents en tant que moyens de support de bobine, chaque bobine étant enroulée autour de sa dent la portant, au moins une extrémité longitudinale du stator des premiers et second côtés présentant une dent auxiliaire ne portant pas de bobine, caractérisé en ce que les bobines sont disposées respectivement sur un premier et un second côté d'un passage central en créant un entrefer respectif entre séries de bobines et d'aimants et en ce que les extrémités longitudinales du stator présentent une dissymétrie par rapport aux extrémités longitudinales respectives en vis-à-vis tandis qu'une extrémité longitudinale du stator sur le second côté présente une dissymétrie par rapport à l'autre extrémité du stator, chacune des dents auxiliaires se trouvant respectivement à une des extrémités longitudinales des premier et second côtés du passage du stator sont de hauteur moindre que les dents servant de moyens de support de bobine, le stator sur les premier et second côtés comprenant une dent auxiliaire sur une de ses extrémités longitudinales, son autre extrémité longitudinale ne portant pas de dent auxiliaire, l'extrémité longitudinale du stator étant alors formée par la face orientée vers l'extérieur du stator de la bobine portée par la dent servant de moyens de support adjacente à cette extrémité longitudinale.

Le demandeur a constaté que la conception d'un moteur linéaire comme divulgué dans l'état de la technique le plus proche avec des dents auxiliaires de chaque côté d'une série de dents ne suffisait pas à résoudre le problème de la force de détente.

Dans l'état de la technique selon le document US-A-2004/217659, les dents auxiliaires se trouvent sur les deux extrémités longitudinales d'une série de moyens de support sur un côté du passage médian et ne sont pas symétriques. Ceci ne résout cependant qu'une partie du problème et ce document ne donne aucune indication quant à son application pour un moteur à double entrefer. En effet, le moteur linéaire de ce document ne comprend pas un autre entrefer de l'autre côté du passage médian dans le stator.

Pour l'état de la technique selon le document JP-A-2006/034013, il n'a pas été proposé de créer de dissymétries, d'une part, de chaque côté du double entrefer par rapport aux extrémités longitudinales de la portion de stator se trouvant de ce côté et, d'autre part, entre les portions de stator se trouvant en vis-à-vis des deux côtés du passage médian.

En totale opposition avec ces états de la technique, le demandeur de la présente demande a conçu des moyens de support de bobine présentant une double dissymétrie qui concourt à diminuer la force de détente.

La première dissymétrie se trouve dans la série de moyens de support d'un même côté avec un moyen de support à une seule extrémité longitudinale qui soit différent des autres moyens de support de ce côté.

La seconde dissymétrie prend place à la même extrémité longitudinale du stator où le moyen de support sur un côté du passage est différent du moyen de support disposé de l'autre côté du passage.

Cette double dissymétrie non décrite dans l'art antérieur permet de résoudre le problème de la force de détente très préjudiciable à un fonctionnement optimal du moteur linéaire.

De manière facultative, et comme décrit dans les revendications dépendantes, l'invention comprend en outre au moins l'une quelconque des caractéristiques suivantes :
- l'extrémité longitudinale portant une dent auxiliaire du premier ou du second côté est en vis-à-vis de l'extrémité longitudinale ne portant pas de dent du second ou du premier côté.
- les armatures des premier et second côtés sont sous la forme respective d'un peigne, les dents formant les dents du peigne en pointant vers le passage central.
- les moyens de support de bobine du premier côté du passage du stator présentent un décalage dans la longueur du passage par rapport aux moyens de support de bobine du second côté.
- entre deux moyens de support de bobine adjacents, il est intercalé une dent intermédiaire ne portant pas de bobine.
- la largeur d'un moyen de support de bobine est supérieure à la largeur d'une dent intermédiaire.
- les aimants sont choisis parmi les aimants ferrites, les aimants à base de terres rares comme des aimants néodyme-fer-bore ou des aimants samarium cobalt, des aimants à base d'aluminium, de nickel ou de cobalt, avec ou sans liant thermoplastique.
- les aimants de la série d'aimants sur l'actuateur sont disposés avec leurs polarités alternées.
- l'alimentation du moteur est triphasée avec une série de bobines pour chaque phase.
- les bobines des différentes phases ne sont pas croisées.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une coupe longitudinale d'un moteur linéaire selon l'état de la technique,
- la figure 2 est une représentation schématique d'une coupe longitudinale d'un moteur linéaire selon une première forme de réalisation de la présente invention,
- la figure 3 est une représentation schématique d'une coupe longitudinale d'un moteur d'un moteur linéaire selon une deuxième forme de réalisation de la présente invention.

Les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier les dimensions des différentes pièces du moteur ou de la génératrice ne sont pas représentatives de la réalité.

La figure 1 a déjà été décrite dans la partie introductive de la présente demande.

Aux figures 1 à 3, seuls sont représentés pour le moteur linéaire 1 ses élément actifs, c'est-à-dire générant la force mécanique linéaire. Les autres éléments mécaniques, par exemple carter, tige, chape, glissière ne sont pas représentés sur les figures.

En se référant aux figures 2 et 3, et plus particulièrement à la figure 2, d'une manière générale, la présente invention concerne un moteur linéaire 1 comprenant un actuateur 2 en mouvement de va et vient par rapport à un stator 3.

L'actuateur 2 comprend une série d'aimants 4 s'étendant dans sa longueur. Le stator 3 comprend un passage central longitudinal pour l'actuateur 2 et une série de bobines 5 disposées respectivement sur un premier et un second côté du passage central en créant un entrefer 6 respectif entre séries de bobines 5 et séries d'aimants 4. Une seule bobine et un seul aimant sont référencés respectivement 5 et 4 aux figures.

Les aimants 4 de la série d'aimants sur l'actuateur 2 peuvent être disposés avec leurs polarités alternées
Les aimants 4 peuvent être choisis parmi les aimants ferrites, les aimants à base de terres rares comme des aimants néodyme-fer-bore ou des aimants samarium cobalt, des aimants à base d'aluminium, de nickel ou de cobalt, avec ou sans liant thermoplastique. Les aimants de la série d'aimants 4 sur l'actuateur 2 peuvent être disposés avec leurs polarités alternées.

Deux circuits magnétiques sont ainsi créés, chacun sur un côté du passage de l'actionneur 2 à travers le stator 3. Le moteur linéaire électrique peut ainsi être qualifié de moteur à double entrefer 6. Il est aussi possible d'avoir d'autres entrefers latéraux mais ceci n'est pas préféré, le moteur linéaire 1 prenant alors trop d'épaisseur.

Les bobines 5 sont avantageusement des fils de cuivre ou d'aluminium bobinés mais il peut aussi être utilisé des bobines sous forme rigide en un seul tenant. Ces bobines sont disposées sur des moyens de support 9 respectifs, un seul moyen de support 9 étant référencé aux figures, cette référence désignant tout moyen de support n'étant pas d'extrémité. Ces moyens de support 9 contiennent généralement du fer mais la présente invention est applicable aussi à des moyens de support ne comportant pas de fer, comme par exemple en matériau plastique, composite, céramique ou en verre, bien que dans ce cas, la force de détente ne soit pas aussi importante que quand les moyens de support de bobine contiennent du fer.

Quand l'actuateur 2 avec ses aimants 4 est mis en mouvement, il peut s'effectuer un crantage dû à la force de détente d'origine magnétique à cause de l'interaction du champ magnétique créé par les aimants 4 et le fer du stator 3. La présente invention concerne la réduction de cette force de détente.

Selon la présente invention, une extrémité longitudinale 7 du stator 3 présente une dissymétrie par rapport à l'autre extrémité 8a du stator 3. De plus, les bobines 5 sont disposées respectivement sur un premier et un second côté d'un passage central en créant un entrefer 6 respectif entre séries de bobines 5 et d'aimants 4.

Toujours selon l'invention, les extrémités longitudinales 7, 8a du stator 3 de chaque côté du passage central présentent une dissymétrie par rapport aux extrémités longitudinales respectives en vis-à-vis 7a, 8 tandis qu'une extrémité longitudinale 7a du stator 3 sur le second côté présente une dissymétrie par rapport à l'autre extrémité 8 du stator 3, ceci comme pour le premier côté.

A la figure 2, il est visible que, sur une première extrémité respective longitudinale du stator 3, l'extrémité longitudinale 7 sur un côté du passage n'est pas similaire à l'extrémité longitudinale 7a sur l'autre côté du passage. De plus, la forme de cette extrémité longitudinale équivalents à celle des moyens de support 9 de bobine se trouvant du même côté du passage.

Il en va de même pour la seconde extrémité respective longitudinale du stator 3, cette seconde extrémité longitudinale 8 sur un côté du passage n'étant pas similaire à l'extrémité longitudinale 8a sur l'autre côté du passage et cette extrémité longitudinale 8 n'étant pas équivalente aux moyens de support 9 de bobine se trouvant du même côté du passage.

Les moyens de support 9 de bobine peuvent être sous la forme de dents ou d'encoches, chaque dent ou chaque encoche supportant une bobine respective.

Le stator 3 peut comprendre sur les premier et second côtés une armature présentant des dents en tant que moyens de support 9 de bobine, chaque bobine 5 étant enroulée autour de sa dent 9 la portant, au moins une extrémité longitudinale du stator 3 des premiers et second côtés présentant une dent auxiliaire 7a, 8a ne portant pas de bobine.

Les armatures du stator 3 présentes sur les premier et second côtés peuvent être sous la forme respective d'un peigne, les dents 9, 7a, 8a formant les dents du peigne pointant vers le passage central, les unes vers les autres pour les dents du premier côté par rapport aux dents du second côté.

Dans un mode de réalisation non montré aux figures, chacune des dents auxiliaires se trouvant respectivement à une des extrémités longitudinales des premier et second côtés du passage du stator sont de hauteur moindre que les dents servant de moyens de support de bobine. Ces dents auxiliaires sont aussi de hauteur ou de largeur différente l'une par rapport à l'autre pour créer une dissymétrie. Il se peut qu'une dent auxiliaire d'une extrémité longitudinale du premier côté, par exemple à droite, soit similaire à une dent auxiliaire d'une extrémité longitudinale opposée du second côté, par exemple celle de gauche pour tous les extrémités longitudinales des portions de stator sur les premier et second côtés.

Dans le mode de réalisation montré aux figures 2 et 3, le stator 3 sur les premier et second côtés peut comprendre une dent auxiliaire sur une de ses extrémités longitudinales 7a, 8a, son autre extrémité longitudinale 7, 8 ne portant pas de dent auxiliaire. Son autre extrémité longitudinale 7, 8 du même côté est alors formée par la face orientée vers l'extérieur du stator 3 de la bobine 5 portée par la dent servant de moyens de support 9 adjacente à cette extrémité longitudinale.

Dans les deux cas, la forme du circuit magnétique associé sur chacun des côtés du passage de l'actuateur 2 dans le stator 3 est dissymétrique en étant différente de celle d'un circuit magnétique classique. L'extrémité longitudinale 7a, 8a portant une dent auxiliaire du premier ou du second côté est alors en vis-à-vis de l'extrémité longitudinale 7, 8 ne portant pas de dent du second ou du premier côté pour créer aussi une dissymétrie entre premier et second côtés.

Dans une forme de réalisation préférentielle de la présente invention, montrée à la figure 3, les moyens de support 9 de bobine du premier côté du passage du stator 3 présentent un décalage 13 dans la longueur du passage par rapport aux moyens de support 9 de bobine du second côté. Un certain pas prédéterminé peut être conservé pour tous les moyens de support 9 de bobine consécutifs aussi bien du premier côté que du second côté.

Ce décalage 13 peut encore diminuer l'effet de crantage mais présente l'inconvénient de diminuer légèrement la force générée par le moteur linéaire 1.

Dans une forme de réalisation préférentielle montrée aux figures 2 et 3, donc à la figure 3 en combinaison avec un décalage 13 entre moyens de support 9 de bobine d'un premier côté avec les moyens de support 9 de bobine d'un second côté du passage traversant le stator 3, entre deux moyens de support 9 de bobine adjacents, il peut être intercalé une dent intermédiaire ne portant pas de bobine.

Aux figures 2 et 3, la largeur 10 d'un moyen de support 9 de bobine est supérieure à la largeur 11 d'une dent intermédiaire. Il se peut qu'une dent auxiliaire d'extrémité longitudinale présente la même largeur qu'une dent intermédiaire mais le contraire peut aussi être possible.

Avantageusement, les largeurs différentes des moyens de support 9 et des dents intermédiaires sont au nombre de deux largeurs différentes alternées. Ceci permet de garder les mêmes performances, en termes de force, d'un circuit magnétique classique avec des bobines réparties, les bobines des différentes phases se croisant entre elles.

Dans une telle forme de réalisation, il est préféré utiliser des bobines concentrées, c'est-à-dire des bobines montées sur dents comme moyens de support 9. Un bobinage sur dent présente plusieurs avantages par rapport à un bobinage réparti : fiabilité, pertes Joules plus faibles, plus facile à fabriquer avec des bobineuses automatiques.

L'alimentation du moteur 1 peut être triphasée avec une série de bobines 5 pour chaque phase. Quand l'alimentation du moteur 1 est triphasée avec une série de bobines 5 pour chaque phase, les bobines 5 des différentes phases ne sont pas croisées.

De manière avantageuse, les bobines sont des bobines concentrées bobinées autour de la dent de largeur plus grande. Le nombre des bobines peut varier en fonction de la course.

## Revendications

1. Moteur linéaire (1) comprenant un actuateur (2) en mouvement de va et vient par rapport à un stator (3), l'actuateur (2) comprenant une série d'aimants (4) s'étendant dans sa longueur, le stator (3) comprenant un passage longitudinal pour l'actuateur (2) et une série de bobines (5) disposées sur des moyens de support (9) respectifs, une extrémité longitudinale (7) du stator (3) présentant une dissymétrie par rapport à l'autre extrémité (8a) du stator (3), le stator comprenant sur les premier et second côtés une armature présentant des dents en tant que moyens de support (9) de bobine, chaque bobine (5) étant enroulée autour de sa dent (9) la portant, au moins une extrémité longitudinale du stator (3) des premiers et second côtés présentant une dent auxiliaire (7a, 8a) ne portant pas de bobine, **caractérisé en ce que** les bobines (5) sont disposées respectivement sur un premier et un second côté d'un passage central en créant un entrefer (6) respectif entre séries de bobines (5) et d'aimants (4) et **en ce que** les extrémités longitudinales (7, 8a) du stator (3) présentent une dissymétrie par rapport aux extrémités longitudinales respectives en vis-à-vis (7a, 8) tandis qu'une extrémité longitudinale (7a) du stator (3) sur le second côté présente une dissymétrie par rapport à l'autre extrémité (8) du stator (3) chacune des dents auxiliaires (7a, 8a) se trouvant respectivement à une des extrémités longitudinales des premier et second côtés du passage du stator (3) étant de hauteur moindre que les dents servant de moyens de support (9) de bobine, le stator (3) sur les premier et second côtés comprenant une dent auxiliaire sur une de ses extrémités longitudinales (7a, 8a), son autre extrémité longitudinale (7, 8) ne portant pas de dent auxiliaire, l'extrémité longitudinale du stator (3) étant alors formée par la face orientée vers l'extérieur du stator (3) de la bobine (5) portée par la dent servant de moyens de support (9) adjacente à cette extrémité longitudinale.

2. Moteur linéaire (1) selon la revendication 1, dans lequel l'extrémité longitudinale portant une dent auxiliaire (7a, 8a) du premier ou du second côté est en vis-à-vis de l'extrémité longitudinale (7, 8) ne portant pas de dent du second ou du premier côté.

3. Moteur linéaire (1) selon l'une quelconque des revendications 1 ou dans lequel les armatures des premier et second côtés sont sous la forme respective d'un peigne, les dents (9, 7a, 8a) formant les dents du peigne en pointant vers le passage central.

4. Moteur linéaire (1) selon l'une quelconque des revendications précédentes, dans lequel les moyens de support (9) de bobine du premier côté du passage du stator (3) présentent un décalage (13) dans la longueur du passage par rapport aux moyens de support (9) de bobine du second côté.

5. Moteur linéaire (1) selon l'une quelconque des revendications précédentes, dans lequel entre deux moyens de support (9) de bobine adjacents, il est intercalé une dent intermédiaire ne portant pas de bobine.

6. Moteur linéaire (1) selon la revendication précédente, dans lequel la largeur (10) d'un moyen de support (9) de bobine est supérieure à la largeur (11) d'une dent intermédiaire.

7. Moteur linéaire (1) selon l'une quelconque des revendications précédentes, dans lequel les aimants (4) sont choisis parmi les aimants ferrites, les aimants à base de terres rares comme des aimants néodyme-fer-bore ou des aimants samarium cobalt, des aimants à base d'aluminium, de nickel ou de cobalt, avec ou sans liant thermoplastique.

8. Moteur linéaire (1) selon la revendication précédente, dans lequel les aimants (4) de la série d'aimants sur l'actuateur (2) sont disposés avec leurs polarités alternées.

9. Moteur linéaire (1) selon l'une quelconque des revendications précédentes, dans lequel l'alimentation du moteur (1) est triphasée avec une série de bobines (5) pour chaque phase.

10. Moteur linéaire (1) selon la revendication précédente, dans lequel les bobines (5) des différentes phases ne sont pas croisées.

## Patentansprüche

1. Linearmotor (1), der einen Aktor (2) in Hin- und Her-Bewegung in Bezug auf einen Stator (3) umfasst, wobei der Aktor (2) eine Reihe von Magneten (4) umfasst, die sich in seiner Länge erstrecken, wobei der Stator (3) einen Längsdurchgang für den Aktor (2) und eine Reihe von Spulen (5) umfasst, die auf jeweiligen Tragmitteln (9) angeordnet sind, wobei ein Längsende (7) des Stators (3) in Bezug auf das andere Ende (8a) des Stators (3) eine Asymmetrie aufweist, wobei der Stator an der ersten und zweiten Seite eine Bewehrung umfasst, die Zinken als Spulentragmittel (9) aufweist, wobei jede Spule (5) um ihre sie tragenden Zinke (9) gewickelt ist, wobei mindestens ein Längsende des Stators (3) auf der ersten und zweiten Seite eine zusätzliche Zinke (7a, 8a) aufweist, die keine Spule trägt, **dadurch gekennzeichnet, dass** die Spulen (5) unter Erzeugen eines jeweiligen Spalts (6) zwischen Spulen-(5) und Magnetreihen (4) jeweils an einer ersten und einer zweiten Seite eines zentralen Durchgangs angeordnet sind, und dadurch, dass die Längsenden (7, 8a) des Stators (3) in Bezug auf die jeweiligen gegenüberliegenden Längsenden (7a, 8) eine Asymmetrie aufweisen, während ein Längsende (7a) des Stators (3) an der zweiten Seite in Bezug auf das andere Ende (8) des Stators (3) eine Asymmetrie aufweist, wobei jede der zusätzlichen Zinken (7a, 8a), die sich jeweils an einem der Längsenden auf der ersten und zweiten Seite des Durchgangs des Stators (3) befinden, von geringerer Höhe ist als die Zinken, die als Spulentragmittel (9) dienen, wobei der Stator (3) an der ersten und zweiten Seite eine zusätzliche Zinke an einem seiner Längsenden (7a, 8a) umfasst, wobei sein anderes Längsende (7, 8) keine zusätzliche Zinke trägt, wobei das Längsende des Stators (3) dann von der zur Außenseite des Stators (3) gerichteten Fläche der Spule (5) gebildet wird, die von der als Tragmittel (9) dienenden Zinke getragen wird, welche an dieses Längsende angrenzt.

2. Linearmotor (1) nach Anspruch 1, wobei das Längsende, das eine zusätzliche Zinke (7a, 8a) auf der ersten oder der zweiten Seite trägt, dem Längsende (7, 8) gegenüberliegt, das keine Zinke auf der ersten oder der zweiten Seite trägt.

3. Linearmotor (1) nach einem der Ansprüche 1 oder 2, wobei die Bewehrungen auf der ersten und zweiten Seite in der jeweiligen Form eines Kamms vorliegen, wobei die Zinken (9, 7a, 8a), die die Zinken des Kamms bilden, zum zentralen Durchgang zeigen.

4. Linearmotor (1) nach einem der vorstehenden Ansprüche, wobei die Spulentragmittel (9) auf der ersten Seite des Durchgangs des Stators (3) in Bezug auf die Spulentragmittel (9) auf der zweiten Seite einen Versatz (13) in der Länge des Durchgangs aufweisen.

5. Linearmotor (1) nach einem der vorstehenden Ansprüche, wobei zwischen zwei angrenzenden Spulentragmitteln (9) eine Zwischenzinke eingefügt ist, die keine Spule trägt.

6. Linearmotor (1) nach dem vorstehenden Anspruch, wobei die Breite (10) eines Spulentragmittels (9) größer ist als die Breite (11) einer Zwischenzinke.

7. Linearmotor (1) nach einem der vorstehenden Ansprüche, wobei die Magnete (4) aus den Ferritmagneten, den Magneten auf Basis von seltenen Erden wie etwa Neodym-Eisen-Bor-Magneten oder Samarium-Kobalt-Magneten, Magneten auf Basis von Aluminium, Nickel oder Kobalt, mit oder ohne thermoplastisches Bindemittel, ausgewählt sind.

8. Linearmotor (1) nach dem vorstehenden Anspruch, wobei die Magnete (4) der Reihe von Magneten am Aktor (2) mit ihren Polaritäten im Wechsel angeordnet sind.

9. Linearmotor (1) nach einem der vorstehenden Ansprüche, wobei die Versorgung des Motors (1) dreiphasig ist, mit einer Reihe von Spulen (5) für jede Phase.

10. Linearmotor (1) nach dem vorstehenden Anspruch, wobei sich die Spulen (5) der unterschiedlichen Phasen nicht kreuzen.

## Claims

1. A linear motor (1) comprising an actuator (2) in reciprocating movement relative to a stator (3), the actuator (2) comprising a series of magnets (4) extending in its length, the stator (3) comprising a longitudinal passage for the actuator (2) and a series of coils (5) arranged on respective supporting means (9), a longitudinal end (7) of the stator (3) having an asymmetry relative to the other end (8a) of the stator (3), the stator comprising on the first and second sides a frame having teeth as coil supporting means (9), each coil (5) being wound around its tooth (9) carrying it, at least one longitudinal end of the stator (3) of the first and second sides having an auxiliary tooth (7a, 8a) not carrying a coil, **characterised in that** the coils (5) are arranged respectively on a first and a second side of a central passage creating a respective air gap (6) between series of coils (5) and magnets (4) and **in that** the longitudinal ends (7, 8a) of the stator (3) have an asymmetry relative to the respective opposite longitudinal ends (7a, 8) while a longitudinal end (7a) of the stator (3) on the second side has an asymmetry relative to the other end (8) of the stator (3), each of the auxiliary teeth (7a, 8a) located respectively at one of the longitudinal ends of the first and second sides of the stator (3) passage are of lower height than the teeth used as coil supporting means (9), the stator (3) on the first and second sides comprising an auxiliary tooth on one of its longitudinal ends (7a, 8a), its other longitudinal end (7, 8) not carrying an auxiliary tooth, the longitudinal end of the stator (3) then being formed by the face oriented towards the outside of the stator (3) of the coil (5) carried by the tooth used as supporting means (9) adjacent to this longitudinal end.

2. The linear motor (1) according to claim 1, wherein the longitudinal end carrying an auxiliary tooth (7a, 8a) on the first or second side is opposite to the longitudinal end (7, 8) not carrying a tooth on the second or first side.

3. The linear motor (1) according to any one of claims 1 or 2, wherein the frames of the first and second sides are in the respective shape of a comb, the teeth (9, 7a, 8a) forming the teeth of the comb pointing towards the central passage.

4. The linear motor (1) according to any one of the preceding claims, wherein the coil supporting means (9) on the first side of the passage of the stator (3) have an offset (13) in the length of the passage relative to the coil supporting means (9) on the second side.

5. The linear motor (1) according to any one of the preceding claims, wherein an intermediate tooth not carrying a coil is interposed between two adjacent coil supporting means (9).

6. The linear motor (1) according to the preceding claim, wherein the width (10) of a coil supporting means (9) is greater than the width (11) of an intermediate tooth.

7. The linear motor (1) according to any one of the preceding claims, wherein the magnets (4) are selected from ferrite magnets, rare-earth-based magnets such as neodymium-iron-boron magnets or samarium cobalt magnets, magnets based on aluminium, nickel or cobalt, with or without a thermoplastic binder.

8. The linear motor (1) according to the preceding claim, wherein the magnets (4) of the series of magnets on the actuator (2) are arranged with their polarities alternating.

9. The linear motor (1) according to any one of the preceding claims, wherein the power supply to the motor (1) is three-phase with a series of coils (5) for each phase.

10. The linear motor (1) according to the preceding claim, wherein the coils (5) of the different phases are not cross-wound.
